# EUROPÄISCHE PATENTANMELDUNG

(11) **EP 3 641 114 A1**
(43) Veröffentlichungstag der Anmeldung: **22.04.2020**
(21) Anmeldenummer: 19203236.5
(22) Anmeldetag: 15.10.2019
(51) Int. Cl.: H02M 1/12, H02M 1/44, H02M 7/00, H02M 5/458

(54) **NETZANSCHLUSSKABEL ZUM ANSCHLIESSEN EINES UMRICHTERS AN EIN STROMNETZ**

(30) Priorität: 18.10.2018 DE 102018008279
(71) Anmelder: Diehl AKO Stiftung & Co. KG, 88239 Wangen (DE); Vaillant GmbH, 42859 Remscheid (DE)
(72) Erfinder: Wohlfeil, Arnold, 42799 Leichlingen (DE); Roth, Stefan, 42897 Remscheid (DE); Schnabl, Dennis, 42859 Remscheid (DE); Schmid, Andreas, 88239 Wangen im Allgäu (DE)
(74) Vertreter: Diehl Patentabteilung

(57) **Zusammenfassung**

Ein Netzanschlusskabel (16) zum Anschließen eines Umrichters (10) für ein elektrisches Gerät an ein Stromnetz (18) weist mehrere Leitungen (24), einen Netzanschluss (26) zur Verbindung der mehreren Leitungen (24) mit einem Stromnetz (18) und einen Umrichteranschluss (28) zur Verbindung der mehreren Leitungen (24) mit einem Eingangsanschluss eines Umrichters (10) auf. Zur Verbesserung der elektromagnetischen Verträglichkeit (EMV) weist das Netzanschlusskabel (16) ferner wenigstens einen Induktionskern (32) zwischen dem Netzanschluss (26) und dem Umrichteranschluss (28), um den die mehreren Leitungen (24) gewickelt sind, und eine Abschirmung (30), die die mehreren Leitungen (24) zwischen dem Netzanschluss (26) und dem Umrichteranschluss (28) im Bereich außerhalb des wenigstens einen Induktionskerns (32) umhüllt, auf.

## Beschreibung

Die vorliegende Erfindung betrifft ein Netzanschlusskabel zum Anschließen eines Umrichters für ein elektrisches Gerät an ein Stromnetz sowie eine Stromversorgungsvorrichtung für ein elektrisches Gerät mit einem Umrichter und einem solchen Netzanschlusskabel.

Es ist allgemein bekannt, dass elektrische Geräte im Betrieb grundsätzlich elektromagnetische Strahlungen aussenden, die elektromagnetische Störungen bei anderen Geräten hervorrufen können. Es ist deshalb ein ständiges Bestreben, die von elektrischen Geräten ausgehende elektromagnetische Strahlung zu minimieren, zum Beispiel durch Reduzieren und/oder Abschirmen der Strahlung. Außerdem sollen elektrische Störungen elektrischer Geräte vom Stromnetz ferngehalten oder zumindest stark begrenzt werden und die elektromagnetische Verträglichkeit elektrischer Geräte gegen Störungen aus dem Stromnetz gewährleitstet werden. Es muss sichergestellt werden, dass die elektromagnetische Verträglichkeit (EMV) der elektrischen Geräte zulässige Grenzen nicht überschreitet.

Elektromotoren werden häufig von Umrichtern mit Strom versorgt. Zum Minimieren der ausgehenden elektromagnetischen Störstrahlung werden beispielsweise Filter in den Umrichter integriert (vgl. z.B. DE 103 27 598 A1) und Motorkabel zwischen dem Umrichter und dem Elektromotor mit Abschirmungen versehen (vgl. z.B. DE 199 63 301 A1). Außerdem ist es bekannt, Netzfilter zwischen den Umrichter und das Stromnetz zu schalten (vgl. z.B. DE 10 2007 022 503 A1).

Es ist die Aufgabe der vorliegenden Erfindung, ein Netzanschlusskabel zum Anschließen eines Umrichters an ein Stromnetz mit verbesserten EMV-Eigenschaften zu schaffen. Diese Aufgabe wird gelöst durch ein Netzanschlusskabel mit den Merkmalen des Anspruchs 1. Besonders bevorzugte Ausgestaltungen und Weiterbildungen der Erfindung sind Gegenstand der abhängigen Ansprüche.

Das erfindungsgemäße Netzanschlusskabel zum Anschließen eines Umrichters für ein elektrisches Gerät an ein Stromnetz weist mehrere Leitungen, einen Netzanschluss zur Verbindung der mehreren Leitungen mit einem Stromnetz und einen Umrichteranschluss zur Verbindung der mehreren Leitungen mit einem Eingangsanschluss eines Umrichters auf. Gemäß der Erfindung weist das Netzanschlusskabel zudem wenigstens einen Induktionskern zwischen dem Netzanschluss und dem Umrichteranschluss, um den die mehreren Leitungen gewickelt sind, und eine Abschirmung, die die mehreren Leitungen zwischen dem Netzanschluss und dem Umrichteranschluss im Bereich außerhalb des wenigstens einen Induktionskerns umhüllt, auf.

Erfindungsgemäß wird vorgeschlagen, das Netzanschlusskabel mit einer Kombination aus zwei EMV-wirksamen Maßnahmen zu versehen, nämlich einer die Leitungen umhüllenden Abschirmung und einem von den Leitungen umwickelten Induktionskern, um eine höherer EMV-Effektivität erzielen zu können. Der Induktionskern ist vorzugsweise aus einem ferromagnetischen Material oder einem Ferrit gebildet, zum Beispiel in Form einer Ferrithülse. Da bei einer Konstruktion, bei welcher zum Beispiel eine Ferrithülse über eine Abschirmung des Netzanschlusskabels geschoben ist, die Gefahr besteht, dass die Abschirmung den Effekt der Ferrithülse reduziert, und andererseits bei einer Konstruktion, bei welcher sich eine Ferrithülse unter einer Abschirmung befindet, die Gefahr besteht, dass die Ferrithülse die Effektivität der Abschirmung reduziert, wird erfindungsgemäß vorgeschlagen, die Abschirmung und den Induktionskern ohne Überlappung nebeneinander zu positionieren, um eine gegenseitige Beeinträchtigung ihrer EMV-Effektivitäten zu vermeiden.

Die mehreren Leitungen des Netzanschlusskabels enthalten bevorzugt zwei, drei oder mehr Leitungen. Außerdem enthalten die mehreren Leitungen des Netzanschlusskabels vorzugsweise einen geerdeten Schutzleiter.

Die mehreren Leitungen des Netzanschlusskabels werden vorzugsweise um einen gemeinsamen Induktionskern gewickelt. Vorzugsweise werden die mehreren Leitungen gleichsinnig um den (gemeinsamen) Induktionskern gewickelt. Die mehreren Leitungen können wahlweise einzeln oder gemeinsam um den (gemeinsamen) Induktionskern gewickelt werden. Die Wicklung der Leitungen um den Induktionskern erfolgt vorzugsweise mit zwei, drei, vier oder mehr Windungen.

Gemäß der Erfindung ist die Abschirmung um die Leitungen nur in einem Bereich außerhalb des Induktionskerns vorgesehen, sodass Abschirmung und Induktionskern einander nicht überlappen. Dabei ist der Bereich des Netzanschlusskabels, in dem weder Abschirmung noch Induktionskern vorgesehen sind, möglichst klein auszuführen. Vorzugsweise ist die Abschirmung des Netzanschlusskabels nur auf einer Seite des Induktionskerns vorgesehen, da dies die Herstellung vereinfacht; wahlweise können aber auch Abschirmungen zu beiden Seiten des Induktionskerns vorgesehen sein. Die Abschirmung weist insbesondere ein elektrisch leitfähiges Material auf.

In einer Ausgestaltung der Erfindung enthalten die mehreren Leitungen einen Schutzleiter und ist die Abschirmung elektrisch leitend mit diesem Schutzleiter verbunden. Da der Schutzleiter geerdet ist, ist somit automatisch auch die Abschirmung geerdet, ohne dass ein zusätzlicher Anschluss der Abschirmung zum Beispiel am elektrischen Gerät erforderlich ist. In einer Ausführungsvariante ist die Abschirmung an ihrer dem Induktionskern zugewandten Seite entflochten und verdrillt und elektrisch leitend mit diesem Schutzleiter verbunden.

In einer Ausgestaltung der Erfindung ist der Induktionskern in einem Endbereich der mehreren Leitungen nahe dem Netzanschluss oder dem Umrichteranschluss positioniert. In diesem Fall kann der Bereich des Netzanschlusskabels ohne Abschirmung möglichst kurz ausgeführt sein, auch wenn die Abschirmung nur auf einer Seite des Induktionskerns vorgesehen ist.

In einer weiteren Ausgestaltung der Erfindung kann das Netzanschlusskabel ferner einen Netzfilter zwischen dem Netzanschluss und dem Umrichteranschluss aufweisen, wobei die Abschirmung die mehreren Leitungen auch nur im Bereich außerhalb des Netzfilters umhüllt. Mit dem zusätzlichen Netzfilter kann die EMV-Effektivität des Netzanschlusskabels weiter erhöht werden. Aufgrund der lokalen Trennung von Abschirmung und Netzfilter kann auch hier eine gegenseitige Beeinträchtigung ihrer EMV-Effektivitäten vermieden werden. Der Netzfilter kann zum Beispiel Drosseln, Y-Kondensatoren und dergleichen enthalten. Der Netzfilter kann vorzugsweise im gleichen Endbereich wie der Induktionskern oder in dem dem Induktionskern abgewandten Endbereich der mehreren Leitungen nahe dem Netzanschluss oder dem Umrichteranschluss positioniert sein.

Gegenstand der Erfindung ist auch eine Stromversorgungsvorrichtung für ein elektrisches Gerät, die einen Umrichter mit einem Wechselrichter zum Bereitstellen einer Wechselspannung für einen Elektromotor des elektrischen Geräts, eine Stromverbindungseinrichtung zum Verbinden des Wechselrichters des Umrichters mit dem Elektromotor des elektrischen Geräts und ein oben erläutertes Netzanschlusskabel der Erfindung zum Anschließen des Umrichters an ein Stromnetz aufweist.

In einer Ausgestaltung der Erfindung kann die Stromverbindungseinrichtung zum Verbinden des Wechselrichters des Umrichters mit dem Elektromotor des elektrischen Geräts bevorzugt eine weitere EMV-Maßnahme aufweisen. Zu den möglichen weiteren EMV-Maßnahmen zählen insbesondere das Vorsehen eine Ausgangsfilters mit einem Induktionskern, um den die Motorphasenleiter und der Schutzleiter zwischen dem Wechselrichter und dem Elektromotor gewickelt sind, ein mit einer Abschirmung versehenes Motorkabel zwischen dem Umrichter und dem Elektromotor, ein mit einer ferromagnetischen Umhüllung versehenes Motorkabel zwischen dem Umrichter und dem Elektromotor, eine zusätzliche Abschirmung um den Schutzleiter zwischen dem Motorkabel und dem Elektromotor, und dergleichen.

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnungen besser verständlich. Darin zeigen, größtenteils schematisch:
- Fig. 1: ein Blockschaltbild einer Stromversorgungsvorrichtung eines Elektromotors mit einem Netzanschlusskabel; und
- Fig. 2: den Aufbau eines Netzanschlusskabels gemäß einem Ausführungsbeispiel der vorliegenden Erfindung.

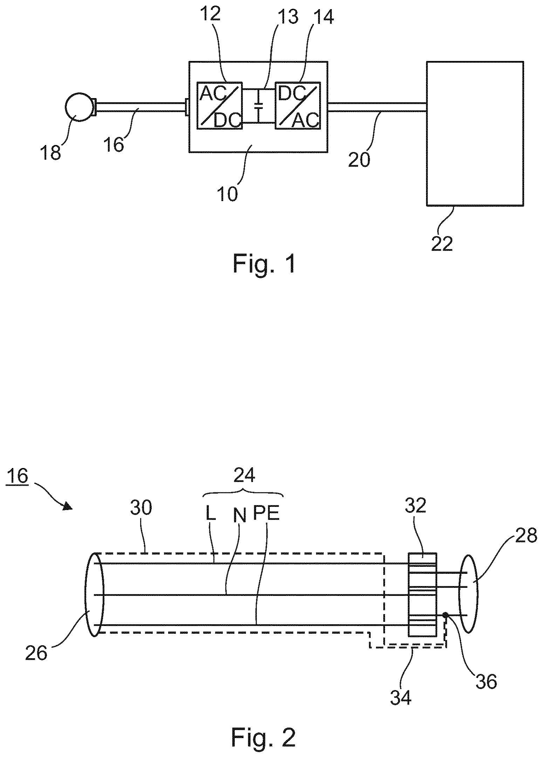

Fig. 1 zeigt beispielhaft eine Stromversorgungvorrichtung für ein elektrisches Gerät wie zum Beispiel eine Wärmepumpe.

Die Stromversorgungsvorrichtung weist einen (Frequenz-)Umrichter 10 auf, in dem insbesondere ein Gleichrichter 12 zum Umwandeln einer eingangsseitig angelegten Wechselspannung in eine Gleichspannung, ein Gleichspannungszwischenkreis 13 und ein Wechselrichter 14 zum Bereitstellen einer vorzugsweise mehrphasigen Wechselspannung vorhanden sind. Der Umrichter 10 ist eingangsseitig über ein Netzanschlusskabel 16 mit einem Stromnetz 18 und ausgangsseitig über ein Motorkabel 20 mit einem Elektromotor 22 der Wärmepumpe verbunden.

Der Umrichter 10 und das Motorkabel 20 selbst sind nicht Gegenstand der vorliegenden Erfindung. Vielmehr kann das erfindungsgemäß ausgestaltete Netzanschlusskabel 16 grundsätzlich in Kombination mit beliebig ausgestalteten und an die jeweilige Anwendung angepassten Umrichtern 10 und Motorkabeln 20 eingesetzt werden.

Aufbau und Funktionsweise eines erfindungsgemäßen Netzanschlusskabels 16 werden nun Bezug nehmend auf Fig. 2 näher erläutert.

Das Netzanschlusskabel 16 enthält mehrere Leitungen 24. Im Ausführungsbeispiel von Fig. 2 sind drei Leitungen 24 vorgesehen: ein Phasenleiter L, ein Neutralleiter N und ein Schutzleiter PE. Je nach Anwendungsfall, insbesondere je nach Ausführungsform des Stromnetzes 18, des Umrichters 10 und/oder des Elektromotors 22, können auch nur zwei oder mehr als drei Leitungen 24 vorgesehen sein, können mehrere Phasenleiter L1, L2, ... für eine mehrphasige Konfiguration vorgesehen sein, kann der Neutralleiter N entfallen oder kann der Schutzleiter PE entfallen.

An einem Ende der Leitungen 24 (links in Fig. 2) weist das Netzanschlusskabel 16 einen entsprechenden Netzanschluss 26 zur Verbindung der Leitungen 24 mit dem Stromnetz 18 auf. Am anderen Ende der Leitungen 24 (rechts in Fig. 2) weist das Netzanschlusskabel 16 einen entsprechenden Umrichteranschluss 28 zur Verbindung der Leitungen 24 mit einem Eingangsanschluss des Umrichters 10 auf.

Um das Aussenden von Störstrahlungen zu vermeiden oder zumindest deutlich zu reduzieren, ist das Netzanschlusskabel 16 mit einer elektrisch leitfähigen Abschirmung 30 versehen, die die mehreren Leitungen 24 umhüllt. Im Ausführungsbeispiel von Fig. 1 schließt diese Abschirmung 30 möglichst direkt an den Netzanschluss 26 an. Im anderen Endbereich der Leitungen 24 nahe dem Umrichteranschluss 28 ist die Abschirmung 30 zurückgezogen, sodass ein Bereich ohne Abschirmung 30 entsteht.

In diesem Bereich ohne Abschirmung 30 ist ein Induktionskern 32 angeordnet, der aus einem Ferrit oder einem ferromagnetischen Material gebildet ist. Die Leitungen 24 des Netzanschlusskabels 16 sind jeweils mehrfach um diesen Induktionskern gewickelt, vorzugsweise gleichsinnig mit zwei, drei oder vier Windungen. Wie in Fig. 2 veranschaulicht, enthält das Netzanschlusskabel 16 vorzugsweise einen gemeinsamen Induktionskern 32 für alle Leitungen 24. Durch diese Maßnahme können elektrische Störungen der Wärmepumpe vom Stromnetz 18 ferngehalten oder zumindest deutlich reduziert werden und elektrische Störungen des Stromnetzes 18 von der Wärmepumpe ferngehalten oder zumindest deutlich reduziert werden.

Der Induktionskern 32 ist möglichst nahe am Umrichteranschluss 28 vorgesehen, sodass nur eine möglichst kurze Strecke der Leitungen 24 des Netzanschlusskabels 16 ohne Abschirmung 30 verbleibt.

Wie ferner in Fig. 2 angedeutet, ist die Abschirmung 30 an ihrer dem Induktionskern 32 zugewandten Seite entflochten und verdrillt. Der entflochtene Schirmabschnitt 34 ist außerdem mit dem Schutzleiter PE des Netzanschlusskabels 16 elektrisch leitend verbunden. Da der Schutzleiter PE geerdet ist, ist somit automatisch auch die Abschirmung 30 geerdet. Auf diese Weise kann ein separater Anschluss der Abschirmung 30 an eine Erdung der Wärmepumpe entfallen, wodurch die Montage des Netzanschlusskabels 16 am Umrichter 10 vereinfacht wird. So kann die Erdung der Abschirmung 30 prozesssicher während des Einbaus in der Fertigungslinie oder beim Austausch des Netzanschlusskabels 16 gewährleistet werden.

In einer Ausführungsvariante des Netzanschlusskabels 16 von Fig. 2 kann der Induktionskern 32 in analoger Weise am anderen Ende der Leitungen 24 nahe dem Netzanschluss 26 positioniert sein.

In einer weiteren Ausführungsvariante des Netzanschlusskabels 16 von Fig. 2 kann zusätzlich zum Induktionskern 32 auch ein Netzfilter vorgesehen sein. Der Netzfilter kann im gleichen Endbereich wie der Induktionskern 32 oder im anderen Endbereich der Leitungen 24 positioniert sein. Der Netzfilter enthält beispielsweise Drosseln für die mehreren Leitungen 24 und/oder eine Y-Kondensatorschaltung. Zum Aufbau eines Netzfilters wird beispielhaft auf die DE 10 2007 022 503 A1 verwiesen.

Das oben beschriebene Netzanschlusskabel 16 der Erfindung verbessert die EMV-Eigenschaften des Netzanschlusskabels 16 selbst und der Verbindung zwischen dem Stromnetz 18 und der Wärmepumpe. Zusätzlich können weitere Maßnahmen zur Verbesserung der EMV-Eigenschaften der Wärmepumpe und ihrer Stromversorgungseinrichtung vorgesehen sein. Zum Beispiel kann ein Ausgangsfilter mit einem Induktionskern aus einem ferromagnetischen Material oder Ferrit, um den die Motorphasenleiter und der Schutzleiter zwischen dem Wechselrichter 14 des Umrichters 10 und dem Elektromotor 22 der Wärmepumpe gewickelt sind, vorgesehen sein, um eine Störemission des Motorkabels 20 bzw. der gesamten Stromverbindungseinrichtung zwischen Wechselrichter 14 und Elektromotor 22 zu reduzieren. Ein solcher Ausgangsfilter kann beispielsweise in den Umrichter 10 integriert sein, in das Motorkabel 20 integriert sein oder zwischen einem Ausgangsanschluss des Umrichters 10 und dem Motorkabel 20 angeordnet sein. Alternativ oder zusätzlich kann das Motorkabel 20 mit einer geerdeten, elektrisch leitfähigen Abschirmung und/oder einer ferromagnetischen Umhüllung versehen sein, um eine kapazitive oder induktive Kopplung zwischen dem Motorkabel 20 und der Umgebung (z.B. benachbarte Kabel, leitfähige Gehäuseteile, usw.) zu verhindern. Weiter kann eine zusätzliche Abschirmung um den Schutzleiter zwischen dem Motorkabel 20 und dem Elektromotor 22 vorgesehen sein, welche insbesondere von Vorteil ist, wenn sich der Erdungsanschluss des Motorgehäuses des Elektromotors 22 weiter entfernt von den Motoranschlüssen für die Motorphasenleiter befindet.

### BEZUGSZIFFERNLISTE

- 10: Umrichter
- 12: Gleichrichter
- 13: Gleichspannungszwischenkreis
- 14: Wechselrichter
- 16: Netzanschlusskabel
- 18: Stromnetz
- 20: Motorkabel
- 22: Elektromotor
- 24: Leitungen
- 26: Netzanschluss
- 28: Umrichteranschluss
- 30: Abschirmung
- 32: Induktionskern
- 34: entflochtener Schirmabschnitt
- 36: Schutzleiterverbindung

- L: Phasenleiter
- N: Neutralleiter
- PE: Schutzleiter

## Patentansprüche

1. Netzanschlusskabel (16) zum Anschließen eines Umrichters (10) für ein elektrisches Gerät an ein Stromnetz (18), aufweisend:
mehrere Leitungen (24);
einen Netzanschluss (26) zur Verbindung der mehreren Leitungen (24) mit einem Stromnetz (18); und
einen Umrichteranschluss (28) zur Verbindung der mehreren Leitungen (24) mit einem Eingangsanschluss eines Umrichters (10),
**gekennzeichnet durch**
wenigstens einen Induktionskern (32) zwischen dem Netzanschluss (26) und dem Umrichteranschluss (28), um den die mehreren Leitungen (24) gewickelt sind; und eine Abschirmung (30), die die mehreren Leitungen (24) zwischen dem Netzanschluss (26) und dem Umrichteranschluss (28) im Bereich außerhalb des wenigstens einen Induktionskerns (32) umhüllt.

2. Netzanschlusskabel nach Anspruch 1, bei welchem die mehreren Leitungen (24) einen Schutzleiter (PE) enthalten und die Abschirmung (30) elektrisch leitend mit dem Schutzleiter (PE) verbunden ist (36).

3. Netzanschlusskabel nach Anspruch 2, bei welchem die Abschirmung (30) an ihrer dem Induktionskern (32) zugewandten Seite entflochten und verdrillt und elektrisch leitend mit dem Schutzleiter (PE) verbunden ist (36).

4. Netzanschlusskabel nach einem der vorhergehenden Ansprüche, bei welchem der Induktionskern (32) in einem Endbereich der mehreren Leitungen (24) nahe dem Netzanschluss (26) oder dem Umrichteranschluss (28) positioniert ist.

5. Netzanschlusskabel nach einem der vorhergehenden Ansprüche, bei welchem die mehreren Leitungen (24) um einen gemeinsamen Induktionskern (32) gewickelt sind.

6. Netzanschlusskabel nach einem der vorhergehenden Ansprüche, bei welchem das Netzanschlusskabel (16) ferner einen Netzfilter zwischen dem Netzanschluss (26) und dem Umrichteranschluss (28) aufweist, wobei die Abschirmung (30) die mehreren Leitungen (24) auch nur im Bereich außerhalb des Netzfilters umhüllt.

7. Stromversorgungsvorrichtung für ein elektrisches Gerät, aufweisend einen Umrichter (10) mit einem Wechselrichter (14) zum Bereitstellen einer Wechselspannung für einen Elektromotor (22) des elektrischen Geräts, eine Stromverbindungseinrichtung zum Verbinden des Wechselrichters (14) des Umrichters (10) mit dem Elektromotor (22) des elektrischen Geräts und ein Netzanschlusskabel (16) zum Anschließen des Umrichters (10) an ein Stromnetz (18), wobei das Netzanschlusskabel nach einem der Ansprüche 1 bis 6 ausgestaltet ist.

8. Stromversorgungsvorrichtung nach Anspruch 7, bei welcher die Stromverbindungseinrichtung zum Verbinden des Wechselrichters (14) des Umrichters (10) mit dem Elektromotor (22) des elektrischen Geräts eine weitere EMV-Maßnahme aufweist.
